# EUROPEAN PATENT APPLICATION

(11) **EP 4 428 990 A1**
(43) Date of publication of application: **11.09.2024**
(21) Application number: 23857576.5
(22) Date of filing: 19.07.2023
(51) Int. Cl.: H01M 10/6551, H01M 10/6553, H01M 10/6556, H01M 10/613, H01M 10/647, H01M 10/6568, H01M 50/24, H01M 50/595, H01M 50/588, H01M 50/502

(54) **BATTERY MODULE AND BATTERY PACK COMPRISING SAME**

(30) Priority: 24.08.2022 KR 20220106189
(71) Applicant: LG Energy Solution, Ltd., Seoul 07335 (KR)
(72) Inventor: LEE, Jung Hoon, Daejeon 34122 (KR); RYU, Jaeuk, Daejeon 34122 (KR); KIM, Dooseung, Daejeon 34122 (KR); UM, Taeki, Daejeon 34122 (KR)
(74) Representative: Plasseraud IP
(86) International application number: PCT/KR2023/010386
(87) International publication number: WO 2024/043540

(57) **Abstract**

A battery module according to one embodiment of the present disclosure includes a plurality of battery cell groups including at least one battery cell and stacked along one direction; and a heat sink that cools the battery cell groups, wherein the battery cell includes electrode leads that protrudes in a direction perpendicular to the direction in which the battery cell groups are stacked, wherein the heat sink is located in a direction in which the electrode leads protrude with reference to the cooling tubes and the battery cells interposed between the battery cell groups, and extends along the direction in which the battery cell groups are stacked, and includes a manifold connecting the cooling tubes, wherein a flow path is formed in the inside of the cooling tube and the manifold, so that a coolant flows along the inside of the cooling tube and the manifold, and wherein the cooling tube comes into contact with one surface of the battery cell group.

## Description

### [TECHNICAL FIELD]

### Cross Citation with Related Application(s)

This application claims priority to and the benefit of Korean Patent Application No. 10-2022-0106189, filed on August 24, 2022, the disclosure of which is hereby incorporated by reference in its entirety.

The present disclosure relates to a battery module and a battery pack including the same, and more particularly, to a battery module that enables direct cooling and thus has improved cooling performance, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (Battery Disconnect Unit), a BMS (battery management system) and a cooling system to form a battery pack.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a medium- or large-sized battery module is included in a battery pack for a vehicle, the battery module may be frequently exposed to direct sunlight and may be placed under high-temperature conditions, for example, in summer or in a desert. Therefore, when configuring a battery module or a battery pack, it may be very important to ensure stable and effective cooling performance. Cooling methods of battery modules or battery packs can be largely classified into a water cooling method using a coolant such as cooling water and an air cooling method using cooling wind. Among them, water-cooled type cooling has excellent cooling performance and can effectively cool high heat generated from large-capacity battery modules or battery packs.

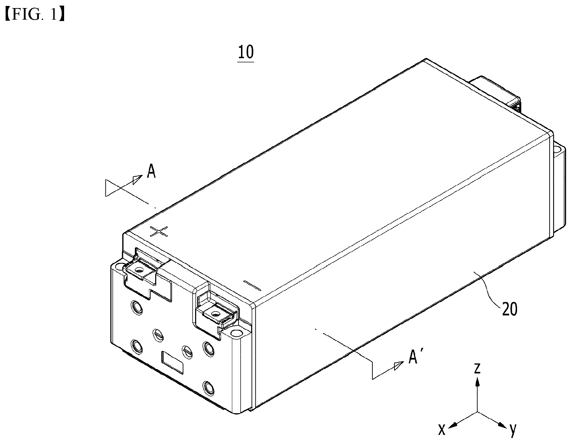

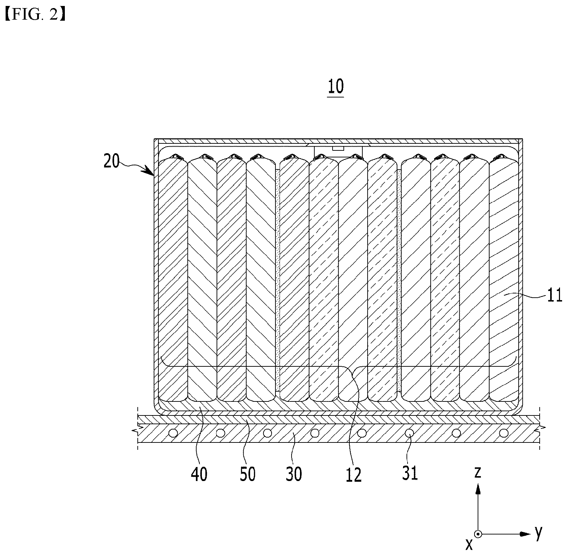

Fig. 1 is a perspective view of a conventional battery module, and Fig. 2 is a cross-sectional view showing a cross section taken along the cutting line A-A' of Fig. 1. However, Fig. 2 further shows a heat sink 30 arranged under the battery module 10 for convenience of explanation.

Referring to Figs. 1 and 2, the conventional battery module 10 includes a battery cell stack 12 formed by stacking a plurality of battery cells 11 and a module frame 20 that houses the battery cell stack 12. At this time, the battery cell 11 is a pouch-type battery cell, and the pouch-type battery cell forms a rectangular sheet structure.

Since a plurality of battery cells 11 are stacked, the battery module 10 generates a large amount of heat in a charge and discharge process. The battery module 10 including a pouch-type battery cell is cooled by bringing the ends of the battery cells 11 into indirect or direct contact with a heat sink 30 having a fixed position and size.

Specifically, the battery module 10 may include a thermal resin layer 40 located between the battery cell stack 12 and the bottom part of the module frame 20. Additionally, when the battery module 10 is mounted on the pack frame to form a battery pack, the heat transfer member 50 and the heat sink 30 may be located in sequence under the battery module 10. The heat transfer member 50 may be a heat dissipation pad, and a cooling flow path 31 through which a coolant such as cooling water flows may be formed inside the heat sink 30. The edges of the battery cells 11 stacked in one direction come into contact with the thermal resin layer 40, and the heat generated from the battery cells 11 is discharged to the outside of the battery module 10 through the thermal resin layer 40, the bottom part of the module frame 20, the heat transfer member 50, and the heat sink 30 in the stated order. That is, the conventional battery module 10 adopts a water-cooled type structure in which heat is discharged through the edges of the battery cells 11.

Such a water-cooled type structure utilizing the edge of the battery cells 11 has a relatively simplified structure, but causes deterioration of cooling performance. Also, there is a risk of cracks occurring in the pouch case or the like of the battery cell 11 when high swelling of the battery cell 11 occurs. Specifically, the battery cells 110 may cause a phenomenon in which the internal electrolyte decomposes to generate gas and the battery cell 110 swells in the process of repeated charging and discharging or in the initial charging process, that is, a swelling or breathing phenomenon.

As the capacity of the battery cell increases, the degree of swelling also increases greatly, and the number of battery cells applied to the battery module tends to increase gradually. Therefore, controlling the swelling of the battery cells inside battery modules has become an important issue.

At this time, referring to Fig. 2 again, generally, the thermal resin layer 40 has an adhesive property and thus, the battery cells 11 is fixed thereto. Therefore, when swelling of the battery cell 11 occurs in a direction parallel to the y-axis, high stress occurs at the edge of the battery cell 11, which may lead to cracking in the pouch case of the battery cell 11. Particularly, the more battery cells 11 located outside the battery cell stack 12, the greater the stress due to swelling, which results in a high risk of cracking.

In order to realize high-capacity battery modules and battery packs in the future, Pure Si cells, all-solid-state batteries, and high-SiO-content cells can be applied as pouch battery cells. For such battery cells, the degree of swelling is greater.

When the conventional water cooling method utilizing the edge part is applied to a battery module including battery cells having a high degree of swelling, there is a high risk of cracks occurring in the battery cell, and excessive stress acts, which can impair the structural safety of the battery module.

Accordingly, there is a demand for a battery module having a novel cooling structure that can minimize structural damages generated in the battery cell even if they include battery cells exhibiting high swelling characteristics.

### [DETAILED DESCRIPTION OF THE INVENTION]

### [Technical Problem]

It is an object of the present disclosure to provide a battery module that enables direct cooling for each busbar that connects the battery cells and their electrode leads, and a battery pack including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a plurality of battery cell groups including at least one battery cell and stacked along one direction; and a heat sink that cools the battery cell groups, wherein the battery cell includes electrode leads that protrudes in a direction perpendicular to the direction in which the battery cell groups are stacked, wherein the heat sink comprises cooling tubes interposed between the battery cell groups and a manifold connecting the cooling tubes, located in a direction in which the electrode leads protrude with reference to the battery cells and extending along the direction in which the battery cell groups are stacked, wherein a flow path is formed in the inside of the cooling tube and the manifold, so that a coolant flows along the inside of the cooling tube and the manifold, and wherein the cooling tube comes into contact with one surface of the battery cell group.

The battery module may further comprise a busbar connected to the electrode lead, wherein an insulating member is located between the busbar and the manifold. One surface of the insulating member may come into contact with the busbar, and the other surface of the insulating member may come into contact with the manifold.

The battery module may further comprise an insulating frame located in a direction in which the electrode lead protrudes with reference to the battery cell, wherein the busbar may be mounted on the insulating frame.

The busbar may be mounted on the opposite surface of the surface facing the battery cell groups among the insulating frame, and the electrode lead may be bent after passing through a lead slit formed in the insulating frame, and be connected to the busbar.

The insulating frame may be formed with an opening hole, and the busbar may be exposed toward the manifold through the opening hole.

The busbar may extend from one side of the insulating frame to be exposed toward the manifold.

The insulating member may be an insulating tape that has electrical insulation and adhesive properties.

The battery module may further comprise a busbar connected to the electrode lead, wherein the busbar and the manifold may come into direct contact.

The cooling tube may be in the form of a rectangular sheet, and the cooling tube may cover the whole of one surface of the battery cell group and contact the surface of the battery cell group.

The manifold may have a cylindrical shape.

The battery cell group may have a configuration in which at least one battery cell is wrapped in a wrapping member.

The wrapping member may have electrical insulation properties.

The battery cell group may have a configuration in which two or more battery cells are wrapped in a wrapping member, and a compression pad may be interposed in at least one of the two or more battery cells.

The manifold may include a first manifold located on one side of the cooling tubes, and a second manifold located on the other side of the cooling tubes, and a circulation structure of the coolant may be formed in the first manifold, the cooling tubes, and the second manifold.

An inflow part into which a coolant flows may be connected to a first part of the first manifold, and a discharge part through which the coolant is discharged may be connected to a second part of the first manifold, and the first part and the second part may be divided by a separation member. The coolant may sequentially flow through respective inside of the first part, the cooling tubes connected to the first part, the second manifold, the cooling tubes connected to the second part, and the second part.

An inflow part into which a coolant flows may be connected to the first manifold, and a discharge part through which the coolant is discharged may be connected to the second manifold. The coolant may sequentially flow through respective inside of the first manifold, the cooling tubes, and the second manifold.

According to another embodiment of the present disclosure, there is provided a battery pack comprising: the above-mentioned battery module; a pack frame in which the battery module is housed; and vertical beams disposed on a bottom part of the pack frame so as to be perpendicular to one surface of the bottom part of the pack frame, wherein the battery module is disposed between the vertical beams.

An adhesive member may be located between the battery module and the bottom part of the pack frame.

The battery pack may further comprise an upper bracket that is located at an upper part of the battery module, extends along the direction in which the battery cell groups are stacked, and is fastened to the vertical beam.

The battery module may further comprise a module frame that houses the battery cell groups and the heat sink. The module frame may be formed with a protruding module mounting part, and the module mounting part may be fastened to the vertical beam.

### [Advantageous Effects]

According to the embodiments of the present disclosure, since the heat sink includes a cooling tube located between the battery cells, thus enabling surface cooling of the battery cells rather than the existing edge cooling structure, the battery module has increased cooling performance.

In addition, the electrode lead portion of the battery cell is a portion in which heat generation is excessive in the battery cell, and the busbar connecting the electrode lead of the battery cell is configured to come into contact with the heat sink through an insulating member, thereby further improving the cooling performance of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional battery module;
Fig. 2 is a cross-sectional view showing a cross section taken along the cutting line A-A' of Fig. 1;
Fig. 3 is a perspective view showing a battery module according to an embodiment of the present disclosure;
Fig. 4 is an exploded perspective view which separates and shows the busbar assembly from the battery module of Fig. 3;
Fig. 5 is a perspective view which eliminates the busbar assembly from the battery module of Fig. 3 and shows only the battery cell group and heat sink;
Fig. 6 is a perspective view showing a battery cell group included in the battery module of Fig. 3;
Fig. 7 is a perspective view which eliminates the wrapping member from the battery cell group of Fig. 6 and shows only the battery cells and compression pads;
Fig. 8 is a plan view showing one of the battery cells shown in Fig. 7;
Fig. 9 is a perspective view showing a heat sink included in the battery module of Figs. 3 and 4;
Fig. 10 is a plan view showing the heat sink of Fig. 9 as viewed along the -z axis direction on the xy plane;
Fig. 11 is a partial cross-sectional view showing a part of a cross section taken along the cutting line B-B' of Fig. 3;
Fig. 12 is a perspective view showing an insulating frame included in the battery module of Fig. 3;
Fig. 13 is a partial cross-sectional view showing a part of a cross section taken along the cutting line C-C' of Fig. 3;
Fig. 14 is a perspective view showing an insulating frame and busbar according to another embodiment of the present disclosure;
Fig. 15 is a plan view showing a heat sink according to another embodiment of the present disclosure when viewed along the -z axis direction on the xy plane;
Figs. 16 and 17 are a front view and a top view, respectively, of a battery pack according to an embodiment of the present disclosure; and
Fig. 18 is a perspective view showing a battery pack according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

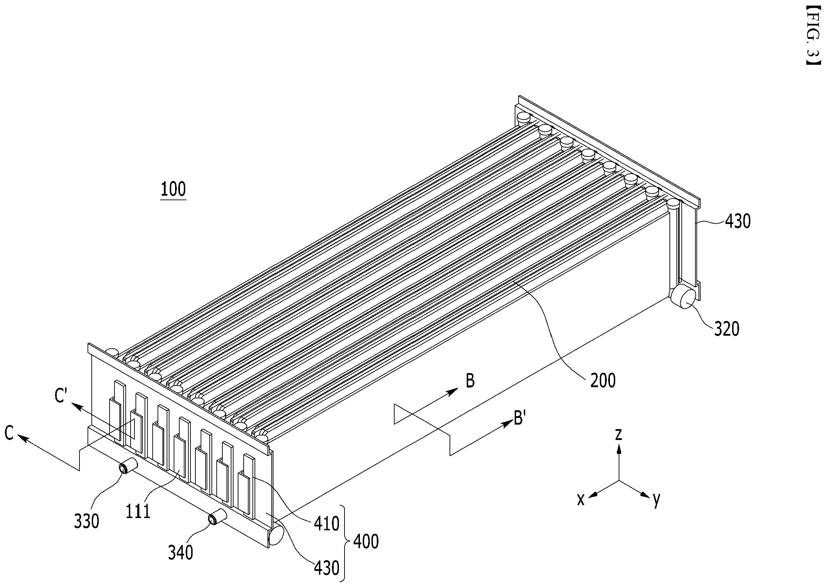

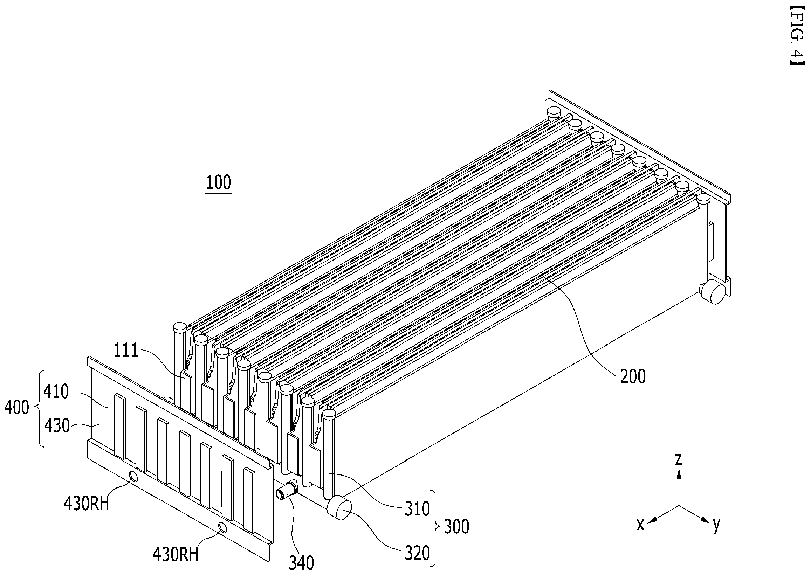

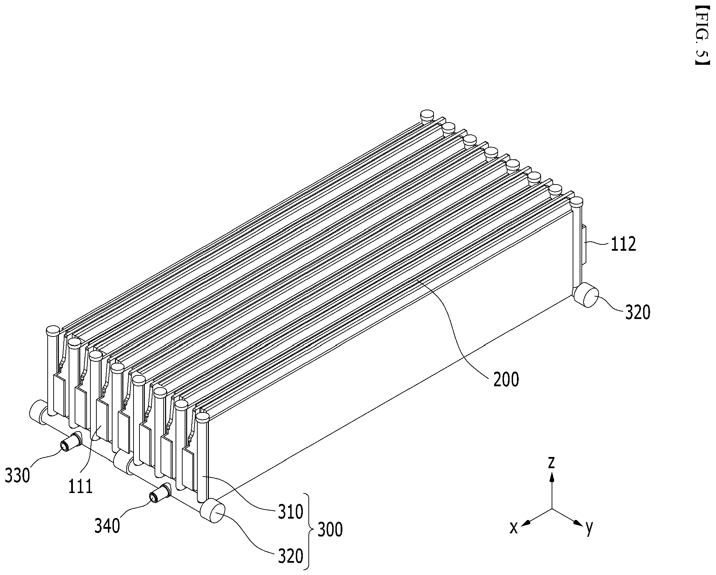

Fig. 3 is a perspective view showing a battery module 100 according to an embodiment of the present disclosure. Fig. 4 is an exploded perspective view which separates and shows the busbar assembly 400 from the battery module 100 of Fig. 3. Fig. 5 is a perspective view which eliminates the busbar assembly 400 from the battery module 100 of Fig. 3 and shows only the battery cell group 200 and heat sink 300.

Referring to Figs. 3 to 5, the battery module 100 according to an embodiment of the present disclosure includes a plurality of battery cell groups 200 stacked along one direction; and a heat sink 300 that cools such battery cell groups 200.

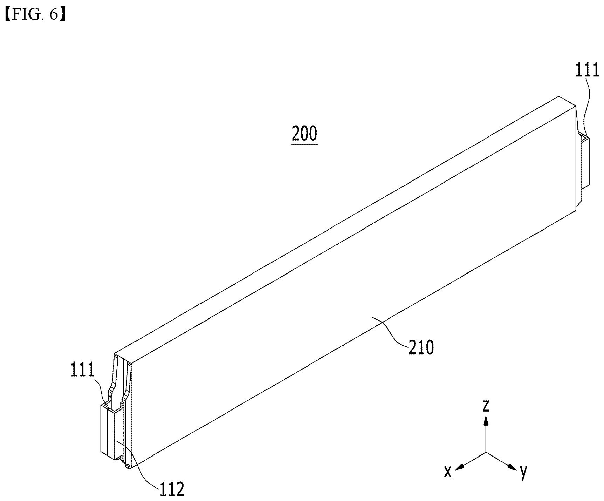

The battery cell group 200 includes at least one battery cell, wherein the battery cell includes electrode leads 111 and 112 that protrude in a direction perpendicular to the direction in which the battery cell groups 200 are stacked. Figs. 3 to 5 illustrate that the battery cell groups 200 are stacked along a direction parallel to the y-axis, and the electrode leads 111 and 112 of the battery cells protrude in both the x-axis direction and the -x-axis direction. The battery cell group 200 will be described in more detail below with reference to Figs. 6 to 8.

The heat sink 300 includes cooling tubes 310 interposed between the battery cell groups 200, and a manifold 320. The manifold 320 is located in the direction in which the electrode leads 111 and 112 protrude with reference to the battery cells, extends along the direction in which the battery cell groups 200 are stacked, and connects the cooling tubes 310. A flow path is formed in the inside of the cooling tube 310 and the manifold 320, so that a coolant flows along the inside of the cooling tube 310 and the manifold 320. The coolant may be cooling water as an example. The battery module 100 according to the present embodiment may have a water-cooled type cooling structure.

Further, the cooling tube 310 interposed between the battery cell groups 200 comes into contact with one surface of the battery cell group 200. The cooling tube 310 may be in the form of a rectangular sheet, and this cooling tube 310 covers the whole of one surface of the battery cell group 200, and may come into contact with one surface of the battery cell group 200. That is, the battery module 100 according to this embodiment has a surface cooling structure in which the cooling tube 310 through which a coolant flows inside comes into direct contact with one surface of the battery cell group 200, unlike a conventional battery module 10 having the edge cooling structure shown in Figs. 1 and 2. In the case of a surface cooling structure, since the surface to be cooled is relatively much wider, cooling performance is greatly improved. In addition, unlike the conventional battery module 10 with an edge cooling structure, since the battery cells are not adhered or fixed to a thermal resin layer 40, high stress does not occur at the edges of the battery cells even if swelling occurs in the battery cells. In other words, it is possible to prevent the pouch case of the battery cell from cracking, thereby improving the structural safety of the battery module 100.

Next, referring to Figs. 6 to 8, the battery cell group 200 according to this embodiment will be described in detail.

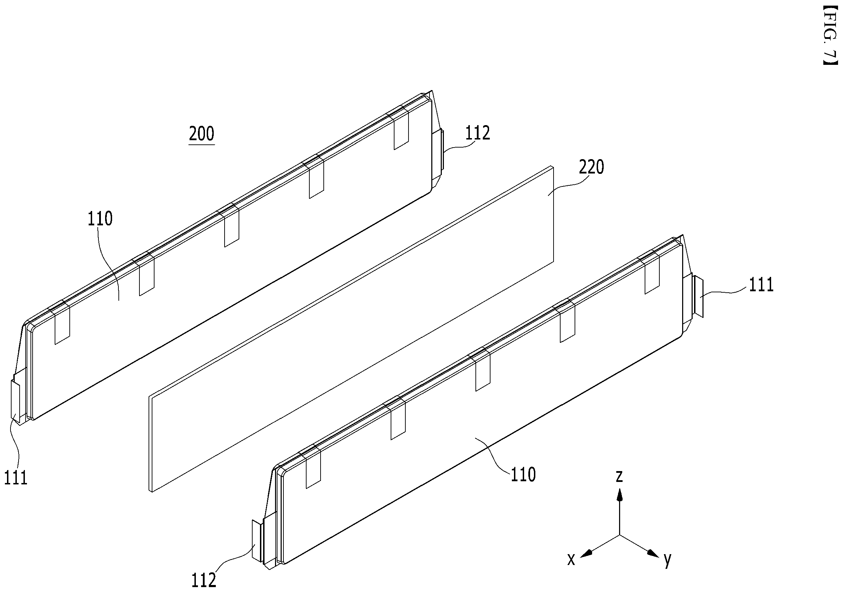

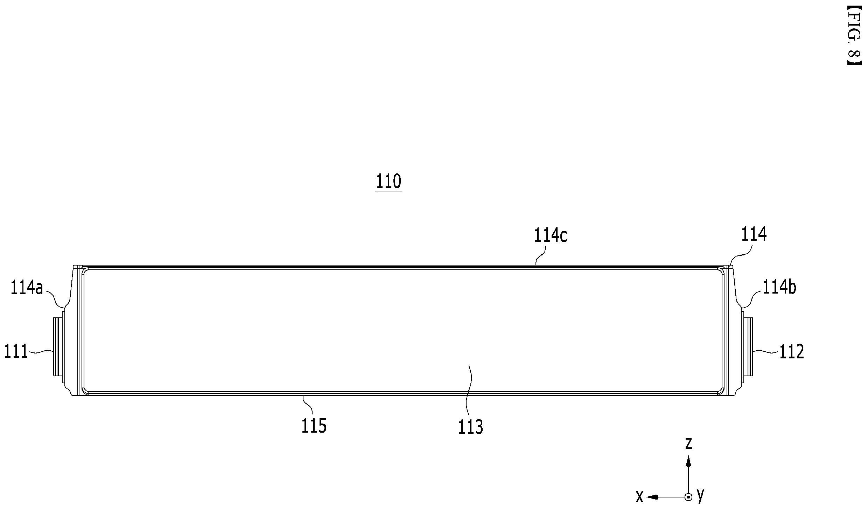

Fig. 6 is a perspective view showing a battery cell group 200 included in the battery module 100 of Fig. 3. Fig. 7 is a perspective view which eliminates the wrapping member 210 from the battery cell group 200 of Fig. 6 and shows only the battery cells 110 and compression pads 220. Fig. 8 is a plan view showing one of the battery cells 110 shown in Fig. 7.

Referring to Figs. 6 to 8 together with Fig. 5, the battery cell group 200 includes at least one battery cell 110. That is, one battery cell 110 can form one battery cell group 200, and a plurality of battery cells 110 may form one battery cell group 200. Figs. 6 and 7 show one an example in which two battery cells 110 are put together to form one battery cell group 200.

The battery cell group 200 in the present disclosure may be a unit that divides an assembly of battery cells 110 disposed between cooling tubes 310. At least one battery cell 110 forms a battery cell group 200, and such battery cell groups 200 are stacked along one direction to form a battery cell stack.

The battery cell 110 according to the present embodiment may be a pouch-type battery cell. The pouch-type battery cell may be formed by housing an electrode assembly in a pouch case made of a laminate sheet including a resin layer and a metal layer, and then joining the outer peripheral part of the pouch case. As shown in Figs. 7 and 8, the battery cells 110 may be formed in a rectangular sheet structure. Specifically, the battery cell 110 according to the present embodiment may have a structure in which two electrode leads 111 and 112 face each other and protrude from one end 114a and the other end 114b of a battery cell body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to one embodiment of the present disclosure has a total of three sealing parts, the sealing parts have a structure that is sealed by a method such as fusion, and the remaining other side part 115 may be composed of a folded part.

Such battery cells 110 form a battery cell group 200, and the battery cell groups 200 are stacked in an upright state along one direction to form a battery cell stack. The one direction that is stacked is a direction perpendicular to one surface of the battery cell body 113 of the battery cells 110, and in this specification, it corresponds to a direction parallel to the y-axis direction. Accordingly, the directions in which the electrode leads 111 and 112 protrude from the battery cells 110 correspond to the x-axis direction and -x-axis direction, which are directions perpendicular to the direction in which the battery cell groups 200 are stacked. Further, as described above, the manifold 320 of the heat sink 300 may be located one by one in the x-axis direction and -x-axis direction, which are directions in which the electrode leads 111 and 112 protrude, respectively, with reference to the battery cell 110.

On the other hand, the battery cell group 200 according to the present embodiment may have a configuration in which at least one battery cell 110 is wrapped in a wrapping member 210. As an example, Fig. 7 shows two battery cells 110 included in the battery cell group 200, and such battery cells 110 can be wrapped together with a wrapping member 210 to form a battery cell group 200 as shown in Fig. 6. The wrapping member 210 may have electrical insulation properties. As an example, the wrapping member 210 may be an insulating tape with electrical insulation properties.

Further, two or more battery cells 110 within the battery cell group 200 may be wrapped with a wrapping member 210, and a compression pad 220 may be interposed at least at one place between the two or more battery cells 110. When the battery cell 110 expands, the compression pad 220 can be compressed to absorb the expansion of the battery cell 110. The material of the compression pad 220 is not particularly limited as long as it can be compressed to absorb expansion, but the material may include polyurethane (PU) material as an example.

In the battery module 100 according to the present embodiment, the battery cell group 200 corresponds to a unit that divides an assembly of battery cells 110 disposed between the cooling tubes 310 of the heat sink 300. When the battery cells 110 are placed between the cooling tubes 310, the battery cells 110 are wound with the wrapping member 210 to form the battery cell group 200, thereby making assembly into the battery module easier and enhancing structural stability after assembly. When multiple battery cells 110 are placed between the cooling tubes 310, unless they are wound with the wrapping member 210 to form a battery cell group 200, the multiple battery cells 110 will not be properly fixed, thereby making assembly into a battery module difficult and impairing stability even after assembly. Additionally, since the wrapping member 210 has electrical insulation properties, it is possible to prevent the battery cells 110 from coming into contact with the leaked refrigerant and causing a short circuit.

Furthermore, an adhesive may be applied to a partial area of the outer side portion of the wrapping member 210 corresponding to one surface of the battery cell group 200. When the one surface of the battery cell group 200 comes into contact with the cooling tube 310, an adhesive is applied to at least a partial area of the one surface of the battery cell group 200, so that the one surface of the battery cell group 200 and the cooling tube 310 can be adhered. This can improve ease of assembly and structural stability.

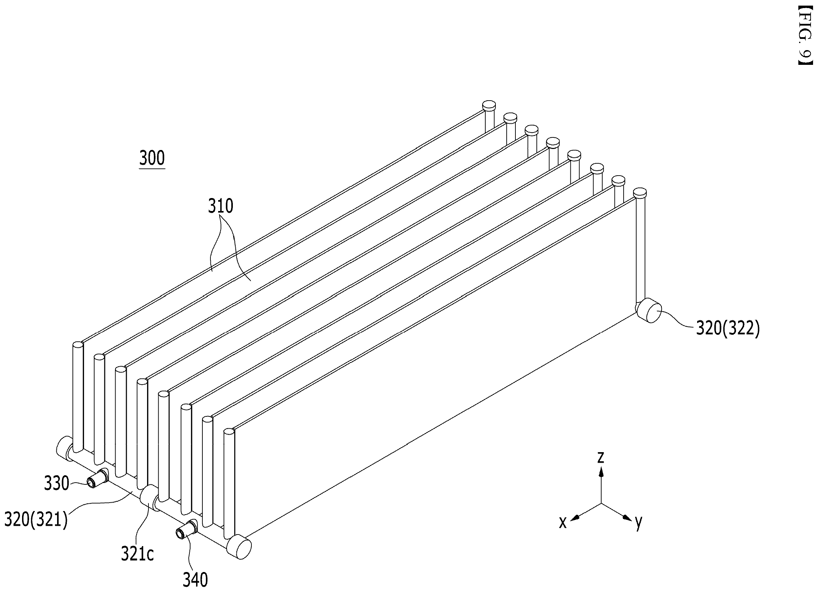

Next, with reference to Figs. 9 to 11, the heat sink and the coolant circulation structure inside the heat sink according to this embodiment will be described in detail.

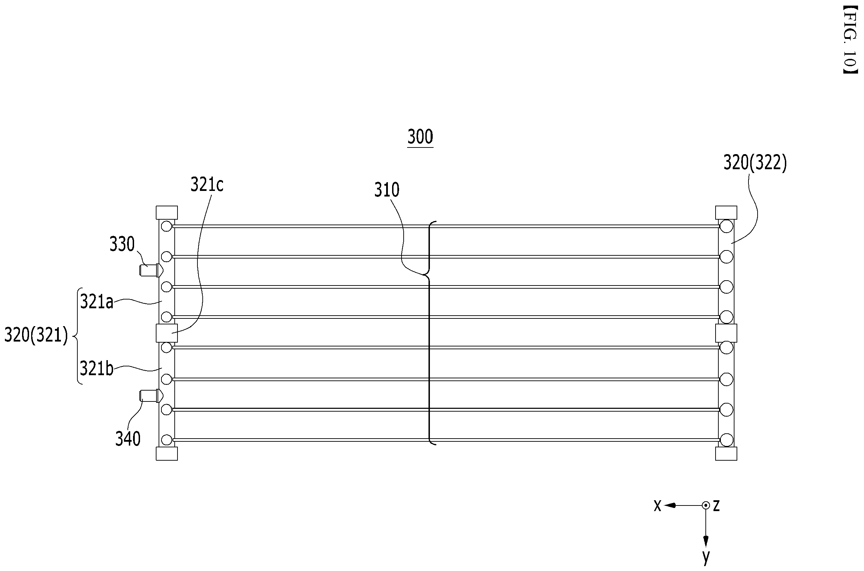

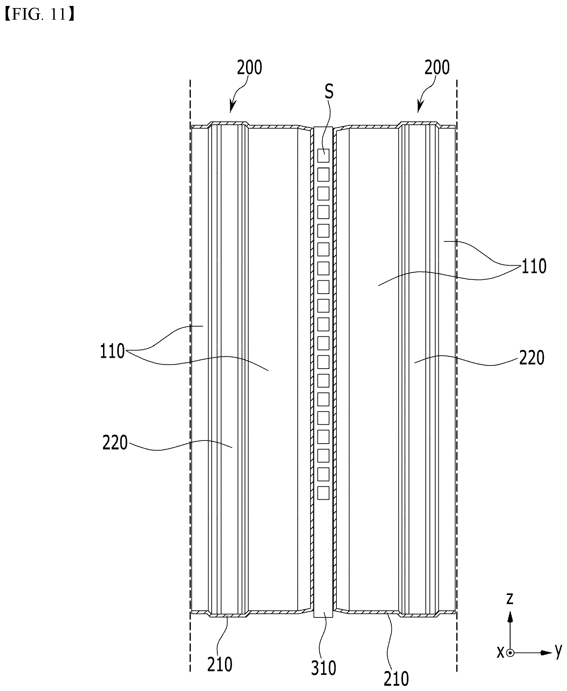

Fig. 9 is a perspective view showing a heat sink 300 included in the battery module 100 of Figs. 3 and 4. Fig. 10 is a plan view showing the heat sink 300 of Fig. 9 as viewed along the - z axis direction on the xy plane. Fig. 11 is a partial cross-sectional view showing a part of a cross section taken along the cutting line B-B' of Fig. 3.

As mentioned above, the heat sink 300 according to the present embodiment includes cooling tubes 310 interposed between battery cell groups 200, and a manifold 320 connecting the cooling tubes 310. The manifold 320 is located in the direction in which the electrode leads 111 and 112 protrude with reference to the battery cell 110, extends along the direction in which the battery cell groups 200 are stacked, and connects the cooling tubes 310. A flow path is formed inside the cooling tube 310 and the manifold 320, so that a coolant flows along the inside of the cooling tube 310 and the manifold 320. The cooling tubes 310 and the manifold 320 may be in the form of a tube containing a metal material with excellent thermal conductivity in order to increase cooling performance.

The cooling tube 310 interposed between the battery cell groups 200 comes into contact with one surface of the battery cell group 200. The cooling tube 310 may be in the form of a rectangular sheet, and may be located in an upright state between the battery cell groups 200. The cooling tube 310 covers the whole of one surface of the battery cell group 200 and may come into contact with the one surface of the battery cell group 200. The wrapping member 210 that wraps the battery cells 110 at the outermost side of the battery cell group 200 may come into contact with a sheet-shaped cooling tube 310.

Additionally, as mentioned above, an adhesive is applied to at least a partial area of the one surface of the battery cell group 200, so that the one surface of the battery cell group 200 and the cooling tube 310 can be adhered. As shown in Fig. 11, the coolant flows in the internal space S of the cooling tube 310 and cools the battery cell groups 200 on the periphery.

On the other hand, the manifold 320 is connected to each of the cooling tubes 310, and the internal space of the manifold 320 and the internal space S of the cooling tube 310 communicate with each other, so that a coolant circulates. As an example, the manifold 320 may be cylindrical. Although the manifold 320 is shown as being connected to the lower end of the cooling tubes 310, the upper and lower portions of the manifold 320 are not particularly limited, and the manifold can also be located at the upper end of the cooling tubes 310.

The manifold 320 according to this embodiment may include a first manifold 321 located on one side of the cooling tubes 310, and a second manifold 322 located on the other side of the cooling tubes 310. In the electrode leads 111 and 112 protruding from the battery cell 110 in mutually opposite directions, the first manifold 321 may be located in the direction in which one electrode lead 111 protrudes, and the second manifold 322 may be located in a direction in which the other electrode lead 112 protrudes. In other words, the first manifold 321 and the second manifold 322 may be located on the opposite sides to each other in reference to the cooling tubes 310.

In the heat sink 300 according to the present embodiment, a circulation structure of the coolant may be formed in the first manifold 321, the cooling tubes 310, and the second manifold 322. Specifically, an inflow part 330 into which the coolant flows may be connected to the first part 321a of the first manifold 321, and a discharge part 340 through which the coolant is discharged may be connected to the second part 321b of the first manifold 321, wherein the first part 321a and the second part 321b may be divided by a separation member 321c. The first part 321a and the second part 321b are blocked by a separation member 321c, so that the connection between the inner space of the first part 321a and the inner space of the second part 321b can be cut off.

The coolant that has flowed into the inflow part 330 may sequentially flow through respective inside of the first part 321a, the cooling tubes 310 connected to the first part 321a, the second manifold 322, the cooling tubes 310 connected to the second part 321b, and the second part 321b, and may finally be discharged through a discharge part 340 connected to the second part 321b. The inflow part 330 and the discharge part 340 are connected to a coolant circulation device (not shown) including a pump, etc., and the coolant flows along the above-mentioned circulation structure.

In the case of the heat sink 300 according to the present embodiment, when the battery module 100 is housed in the pack frame to form a battery pack, the inflow part 330 and the discharge part 340 are located in the same direction, so that a coolant circulation device, including a pump, etc. can be provided on only one side of the battery pack. Accordingly, there is an advantage that the space inside the battery pack can be configured efficiently, and a complicated design of the coolant circulation device is not required.

Next, the busbar assembly 400 according to the present embodiment will be described in detail.

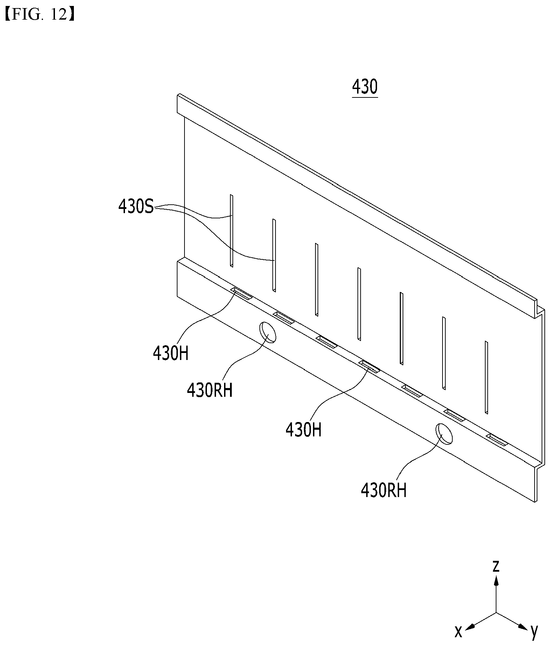

Fig. 12 is a perspective view showing an insulating frame 430 included in the battery module 100 of Fig. 3.

Referring to Figs. 3, 4, and 12 together, the battery module 100 according to the present embodiment may include a busbar assembly 400, wherein the busbar assembly 400 may include a busbar 410 connected to the electrode leads 111 and 112 of the battery cell 110, and an insulating frame 430 located in a direction in which the electrode leads 111 and 112 protrude with reference to the battery cell 110.

When the battery cell 110 or the battery cell group 200 is used as a reference, the insulating frame 430 may be located on the same side as the manifold 320 of the heat sink 300. That is, the insulating frame 430 may be formed by a plurality of numbers and may be located on one side and the other side of the battery cell groups 200, respectively.

The busbar 410 preferably includes a metal material that enables electrical connection. The insulating frame 430 preferably includes an electrically insulating material to prevent a short circuit from occurring due to contact with the battery cells 110 or the like. As an example, the insulating frame 430 may be a plastic injection-molded article.

The busbar 410 may be mounted on the opposite surface of the surface facing the battery cell groups 200 among the insulating frame 430. The electrode leads 111 and 112 protruding from the battery cells 110 may be bent after passing through the lead slit 430S formed in the insulating frame 430, and be connected to the busbar 410. More specifically, one electrode lead 111 may pass through a lead slit 430S of the insulating frame 430 located on one side of the battery cell groups 200 and then be connected to the busbar 410, and the other electrode lead 112 may pass through a lead slit 430S of the insulating frame 430 located on the other side of the battery cell groups 200 and then be connected to the busbar 410. The connection method between the electrode leads 111 and 112 and the busbar 410 is not particularly limited, but weld-jointing may be performed as an example.

In the same manner as mentioned above, the battery cells 110 may be electrically connected to each other in series or in parallel.

Meanwhile, a coolant hole 430RH may be provided in the insulating frame 430 so that the inflow part 330 and the discharge part 340 of the heat sink 300 penetrate therethrough. In addition, although not specifically illustrated, the insulating frame 430 may be mounted with a terminal busbar for connecting external power of the battery module 100 and a module connector for transmitting voltage and temperature sensing information.

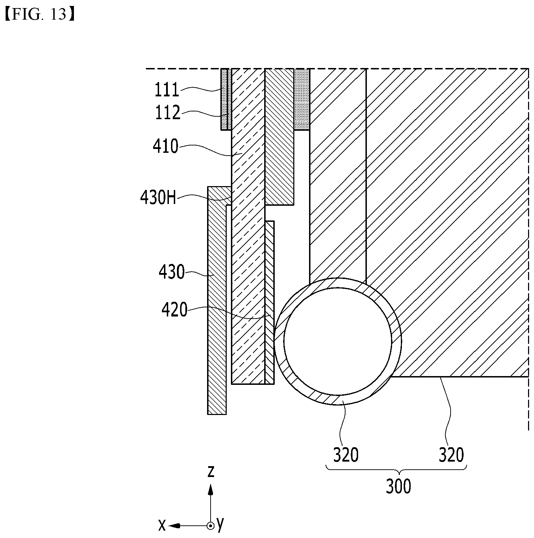

On the other hand, Fig. 13 is a partial cross-sectional view showing a part of a cross section taken along the cutting line C-C' of Fig. 3.

Referring to Figs. 3, 4, 12, and 13 together, the busbar 410 and the manifold 320 of the heat sink 300 may come into contact with each other through the insulating member 420 located therebetween. That is, the insulating member 420 may be attached to the surface of the other portion, rather than the portion where the electrode leads 111 and 112 are connected among the busbar 410, and the busbar 410 may come into contact with the manifold 320 of the heat sink 300 through the surface to which the insulating member 420 is attached. One surface of the insulating member 420 may come into contact with the busbar 410, and the other surface of the insulating member 420 may come into contact with the manifold 320.

As an example, the insulating frame 430 may formed with an opening hole 430H, and the busbars 410 may be exposed toward the manifold 320 of the heat sink 300 through the opening hole 430H, so that the busbar 410 and the manifold 320 can come into contact with each other via the insulating member 420. In order to prevent the busbar 410 from contacting other portion of the battery cell 110 except the portion of the electrode leads 111 and 112, the busbar 410 is mounted on the opposite surface of the surface facing the battery cell groups 200 among the insulating frame 430. At this time, in order to form a direct cooling structure for the busbar 410, an opening hole 430H is formed in the insulating frame 430 so that the busbar 410 passes through this opening hole 430H and extends close to the manifold 320.

When charge and discharge of the battery cell 110 are repeated, heat is generated in the battery cell 110, and it is important to control this heat. If the heat dissipation of the battery cell is not performed properly, deterioration of the battery cell is facilitated, which shortens its lifespan, and increases the possibility of explosion or ignition. Particularly, among the battery cells 110, a great amount of heat is generated in the electrode leads 111 and 112 and both ends 114a and 114b of the battery cell case 114 adjacent to the electrode leads 111 and 112 (see Fig. 8). Accordingly, a great amount of heat is also generated in the busbar 410, which is a portion directly connected to the electrode leads 111 and 112 within the battery module 100.

The battery module 100 according to the present embodiment brings the busbar 410 into direct contact with the manifold 320 of the heat sink 300 through which a coolant flows, thereby realizing a direct cooling structure for the busbar 410 in which heat generation is excessive. Because a direct cooling structure for the busbar 410 is possible, this helps improve the overall cooling performance of the battery module, and the heat generated in the electrode leads 111 and 112 directly connected to the busbar 410 can also be easily discharged.

On the other hand, the insulating member 420 may be an insulating tape that has electrical insulation and adhesive properties. In order to increase the thermal conductivity of the heat sink 300, the cooling tubes 310 and manifolds 320 included in the heat sink 300 may include a metal material. When the busbar 410 comes into contact with such manifolds 320, a short circuit may occur, and therefore, it is preferable to contact them with an insulating member 420 having electrical insulation and adhesive properties interposed therebetween.

In another embodiment of the present disclosure, if the manifold 320 includes an electrically insulating material rather than a metal material, the busbar 410 can come into direct contact with the manifold 320 without the insulating member 420.

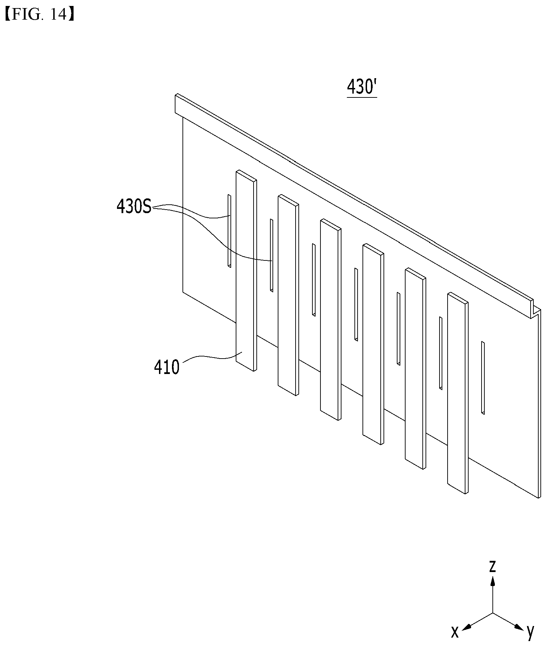

Fig. 14 is a perspective view showing an insulating frame and busbar according to another embodiment of the present disclosure.

Referring to Fig. 14, a busbar 410 may be mounted on an insulating frame 430' according to another embodiment of the present disclosure. The electrode lead may be bent after passing through the lead slit 430S formed in the insulating frame 430', and be connected to the busbar 410. A detailed described will be omitted as it overlaps with the contents described above.

In the present embodiment, the busbar 410 may extend from one side of the insulating frame 430' and be exposed toward the manifold of the heat sink. As shown in Fig. 14, the busbar 410 may extend downward from the insulating frame 430'. Unlike the insulating frame 430 formed with an opening hole 430H shown in Figs. 12 and 13, the insulating frame 430' in this embodiment may be shortened in height so that the busbar 410 is exposed toward the manifold.

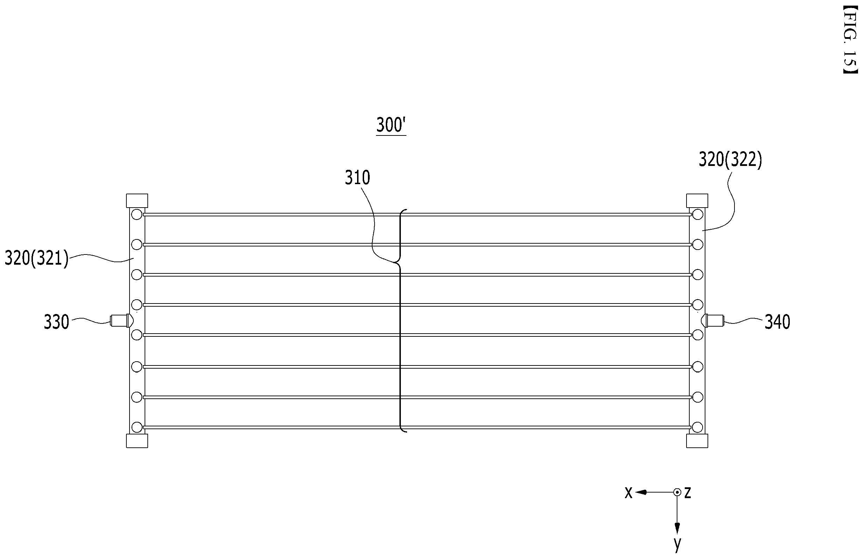

On the other hand, Fig. 15 is a plan view showing a heat sink according to another embodiment of the present disclosure when viewed along the -z axis direction on the xy plane.

Referring to Fig. 15, the heat sink 300' according to another embodiment of the present disclosure includes cooling tubes 310, and a manifold 320 connecting the cooling tubes 310. Further, the manifold 320 may include a first manifold 321 located on one side of the cooling tubes 310, and a second manifold 322 located on the other side of the cooling tubes 310.

In the heat sink 300' according to the present embodiment, a circulation structure of the coolant may be formed in the first manifold 321, the cooling tubes 310, and the second manifold 322. Specifically, an inflow part 330 into which a coolant flows may be connected to the first manifold 321, and a discharge part 340 through which a coolant is discharged may be connected to the second manifold 322.

The coolant that has flowed into the inflow part 330 may sequentially flow through respective inside of the first manifold 321, the cooling tubes 310, and the second manifold 322, and may finally be discharged through a discharge part 340 connected to the second manifold 322. The inflow part 330 and the discharge part 340 are connected to a coolant circulation device (not shown) including a pump, etc., and the coolant flows along the circulation structure as mentioned above.

In the case of the heat sink 300' according to the present embodiment, since the coolant inside the cooling tubes 310 flows in only one direction and its path is shortened, there is an advantage that the coolant can be circulated even with a relatively low pump pressure. Additionally, because the coolant flows in only one direction, there is an advantage that a uniform cooling effect can be achieved for each battery cell 110.

Next, the battery pack including the battery module according to the present embodiment will be described in detail.

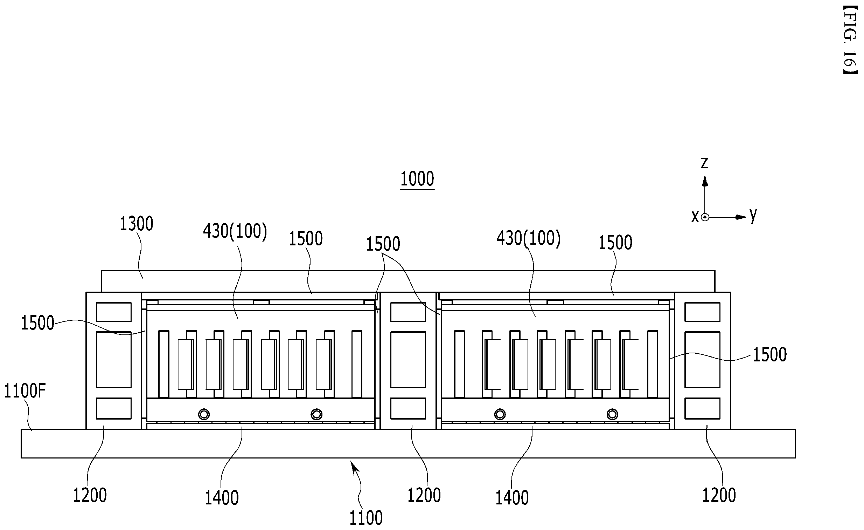

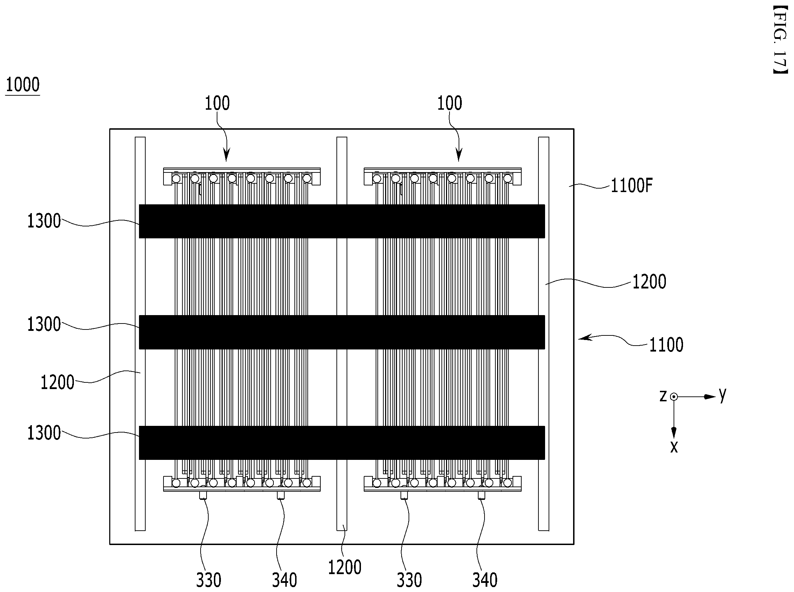

Figs. 16 and 17 are a front view and a top view, respectively, of a battery pack according to an embodiment of the present disclosure. Specifically, in the battery pack 1000 including two battery modules 100 of Fig. 3, the appearance that is viewed along the -x axis direction from the yz plane is shown in Fig. 16, and the appearance that is viewed along the -z axis direction from the xy plane is shown in Fig. 17.

Referring to Figs. 3, 16 and 17, the battery pack 1000 according to an embodiment of the present disclosure includes a battery module 100, a pack frame 1100 in which the battery module 100 is housed, and vertical beams 1200 disposed on the bottom 1100F of the pack frame 1100 so as to be perpendicular to one side of the bottom 1100F of the pack frame 1100. The battery module 100 is disposed between the vertical beams 1200. The number of battery modules 100 provided in the battery pack 1000 is not particularly limited, and one or more battery modules 100 may be disposed.

At this time, an adhesive member 1400 may be located between the battery module 100 and the bottom 1100F of the pack frame 1100. The battery module 100 may be fixed to the bottom 1100F of the pack frame 1100 through an adhesive member 1400 having adhesive properties. The battery module 100 according to the present embodiment does not have a configuration in which the battery cells 110 are housed in a specific frame, but may be mounted on the pack frame 1100 with the battery cell groups 200 and the heat sink 300 directly fixed to the adhesive member 1400.

In addition, the battery pack 1000 may further include an upper bracket 1300 that is located at the upper part of the battery module 100, extends along the direction in which the battery cell groups 200 are stacked, and is fastened to the vertical beam 1200. The upper bracket 1300 may be assembled to the vertical beam 1200, and the method of assembling the upper bracket 1300 and the vertical beam 1200 is not particularly limited, and adhesive, weld-joining, bolt assembly or the like may be applied. The battery module 100 may be mounted and fixed on the pack frame 1100 through the vertical beam 1200 and the upper bracket 1300.

Taken together, the battery module 100 according to the present embodiment does not have a configuration of being housed in a separate frame and fixed to the pack frame as it is, but a configuration of being fixed by an adhesive member 1400 on a bottom part 1100F, a vertical beam 1200, an upper bracket 1300, and the like. Since it is not housed in a separate frame, it is possible to reduce the weight and volume as much as the frame and achieve a simplified structure, which is effective in improving space utilization and increasing battery capacity.

However, since it is not housed in a frame, the battery module 100 does not have sufficient structural rigidity to prevent swelling of the battery cells 110. Therefore, in the present embodiment, it has been designed such that by bringing the side surfaces of the battery module 100 into close contact with the vertical beams 1200, the vertical beam 1200 can compensate for the structural rigidity against swelling of the battery cells 110.

On the other hand, a pad 1500 for tolerance compensation may be disposed at least at one place between the battery module 100 and the vertical beam 1200 or between the battery module 100 and the upper bracket 1300.

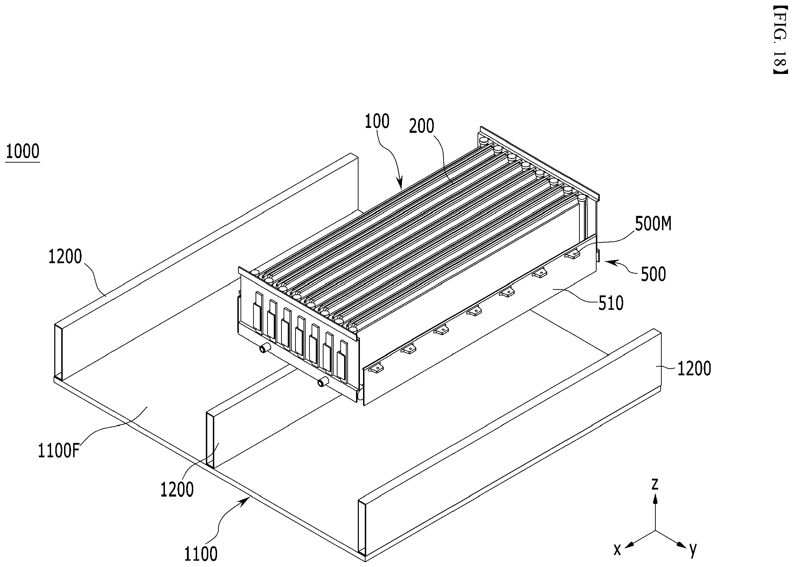

Fig. 18 is a perspective view showing a battery pack according to another embodiment of the present disclosure.

Referring to Fig. 18, the battery pack 1000 according to another embodiment of the present disclosure includes a battery module 100, a pack frame 1100 in which the battery module 100 is housed, and vertical beams 1200 disposed on the bottom part 1100F of the pack frame 1100 so as to be perpendicular to one side of the bottom 1100F of the pack frame 1100, wherein the battery module 100 is disposed between the vertical beams 1200.

The battery module 100 may further include a module frame 500 that houses battery cell groups 200 and a heat sink 300. The module frame 500 includes a bottom surface and side surfaces 510 extending upward from both sides facing the bottom surface, and may have an open top.

The side surface 510 of the module frame 500 may be formed with a module mounting part 500M protruding in a direction perpendicular to the side surface 510, and the module mounting part 500M may be fastened to the vertical beam 1200. As an example, a through hole may be formed in the module mounting part 500M. After the bolt member passes through such a through hole, bolt assembly may be performed in which the bolt member is fastened to the vertical beam 1200.

The battery pack 1000 according to the present embodiment is configured such that the side surface of the battery module 100 is brought into close contact with the vertical beams 1200, and the module mounting portion 500M of the module frame 500 is fastened to the vertical beam 1200, thereby designing so as to complement the structural rigidity against swelling of the battery cell 110 and to ensure that the battery module 100 is firmly fixed to the pack frame 1100.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

- 100:: battery module
- 110:: battery cell
- 200:: battery cell group
- 300:: heat sink
- 310:: cooling tube
- 320:: manifold
- 400:: busbar assembly
- 410:: busbar

## Claims

1. A battery module comprising:
a plurality of battery cell groups including at least one battery cell and stacked along one direction; and
a heat sink that cools the battery cell groups,
wherein the battery cell comprises electrode leads that protrudes in a direction perpendicular to the direction in which the battery cell groups are stacked,
wherein the heat sink comprises cooling tubes interposed between the battery cell groups, and a manifold connecting the cooling tubes, located in a direction in which the electrode leads protrude with reference to the battery cells and extending along the direction in which the battery cell groups are stacked
wherein a flow path is formed in the inside of the cooling tube and the manifold, so that a coolant flows along the inside of the cooling tube and the manifold, and
wherein the cooling tube comes into contact with one surface of the battery cell group.

2. The battery module according to claim 1,
further comprising a busbar connected to the electrode lead,
wherein an insulating member is located between the busbar and the manifold, and
one surface of the insulating member comes into contact with the busbar, and the other surface of the insulating member comes into contact with the manifold.

3. The battery module according to claim 2,
further comprising an insulating frame located in a direction in which the electrode lead protrudes with reference to the battery cell,
wherein the busbar is mounted on the insulating frame.

4. The battery module according to claim 3, wherein:
the busbar is mounted on the opposite surface of the surface facing the battery cell groups among the insulating frame, and
the electrode lead is bent after passing through a lead slit formed in the insulating frame, and is connected to the busbar.

5. The battery module according to claim 4, wherein:
the insulating frame is formed with an opening hole, and
the busbar is exposed toward the manifold through the opening hole.

6. The battery module according to claim 4, wherein:
the busbar extends from one side of the insulating frame to be exposed toward the manifold.

7. The battery module according to claim 2, wherein:
the insulating member is an insulating tape that has electrical insulation and adhesive properties.

8. The battery module according to claim 1,
further comprising a busbar connected to the electrode lead,
wherein the busbar and the manifold come into direct contact.

9. The battery module according to claim 1, wherein:
the cooling tube is in the form of a rectangular sheet, and
the cooling tube covers the whole of one surface of the battery cell group and contacts the surface of the battery cell group.

10. The battery module according to claim 1, wherein:
the manifold has a cylindrical shape.

11. The battery module according to claim 1, wherein:
the battery cell group has a configuration in which at least one battery cell is wrapped in a wrapping member.

12. The battery module according to claim 11, wherein:
the wrapping member has electrical insulation properties.

13. The battery module according to claim 1, wherein:
the battery cell group has a configuration in which two or more battery cells are wrapped in a wrapping member, and a compression pad is interposed in at least one of the two or more battery cells.

14. The battery module according to claim 1, wherein:
the manifold includes a first manifold located on one side of the cooling tubes, and a second manifold located on the other side of the cooling tubes, and
a circulation structure of the coolant is formed in the first manifold, the cooling tubes, and the second manifold.

15. The battery module according to claim 14, wherein:
an inflow part into which the coolant flows is connected to a first part of the first manifold, and a discharge part through which the coolant is discharged is connected to a second part of the first manifold,
the first part and the second part are divided by a separation member, and
the coolant sequentially flows through respective inside of the first part, the cooling tubes connected to the first part, the second manifold, the cooling tubes connected to the second part, and the second part.

16. The battery module according to claim 14, wherein:
an inflow part into which the coolant flows is connected to the first manifold, and a discharge part through which the coolant is discharged is connected to the second manifold, and
the coolant sequentially flows through respective inside of the first manifold, the cooling tubes, and the second manifold.

17. A battery pack comprising:
the battery module according to claim 1;
a pack frame in which the battery module is housed; and
vertical beams disposed on a bottom part of the pack frame so as to be perpendicular to one surface of the bottom part of the pack frame,
wherein the battery module is disposed between the vertical beams.

18. The battery pack according to claim 17, wherein:
an adhesive member is located between the battery module and the bottom part of the pack frame.

19. The battery pack according to claim 17,
further comprising an upper bracket that is located at an upper part of the battery module, extends along the direction in which the battery cell groups are stacked, and is fastened to the vertical beam.

20. The battery pack according to claim 17, wherein:
the battery module further comprises a module frame that houses the battery cell groups and the heat sink,
the module frame is formed with a protruding module mounting part, and
the module mounting part is fastened to the vertical beam.
